# EUROPÄISCHE PATENTSCHRIFT

(11) **EP 1 555 514 B1**
(45) Veröffentlichungstag und Bekanntmachung des Hinweises auf die Patenterteilung: **18.02.2009**
(21) Anmeldenummer: 04030325.7
(22) Anmeldetag: 21.12.2004
(51) Int. Cl.: G01K 13/02

(54) **Messfühler, Verfahren zu dessen Herstellung und elektrisches Gerät mit dem Messfühler**
Sensor, method for manufacturing the same and an electrical apparatus comprising such a sensor
Détecteur, méthode pour sa fabrication et un appareil éléctrique comprennant le détecteur

(30) Priorität: 22.12.2003 DE 10360542
(43) Veröffentlichungstag der Anmeldung: 20.07.2005
(73) Patentinhaber: EPCOS AG, 81669 München (DE)
(72) Erfinder: Kloiber, Gerald, 8073 Feldkirchen (AT); Erhart, Augustin, 8321 St. Margarethen (AT); Strallhofer, Heinz, 8530 Deutschlandsberg (AT)
(74) Vertreter: Epping - Hermann - Fischer

(56) Entgegenhaltungen:
- EP-A- 0 305 027
- EP-A- 1 074 825
- US-A- 4 186 368
- US-A- 4 886 371
- US-A1- 2002 167 990

## Beschreibung

Die Erfindung betrifft einen Meßfühler zum Erfassen von physikalischen Größen.

Ein solcher Fühler ist beispielsweise bekannt aus der Druckschrift DE 101 59 869 A1. Dort ist ein rastbarer Fühler zum Einstecken in die Bohrung eines Gehäuses beschrieben, wobei ein Fühlerkörper und ein Sensorelement durch Kontaktelemente miteinander verbunden sind. Ferner ist der Fühlerkörper mit einem Abdeckbügel zum Schutz des Sensors vor Abknicken versehen.

Aus den Druckschriften US A 4,886,371, EP A 0 305 027 und US A 4,186,368 sind Meßfühler zum Erfassen von physikalischen Größen bekannt.

Es ist Aufgabe der vorliegenden Erfindung, einen Fühler anzugeben, der eine niedrige thermische Ansprechzeit aufweist.

Diese Aufgabe wird gelöst durch einen Fühler nach Patentanspruch 1. Vorteilhafte Ausgestaltungen des Fühlers sind den weiteren Patentansprüchen zu entnehmen.

Es wird ein Meßfühler angegeben, der einen Sensor umfaßt, welcher in einer Hülse angeordnet ist. Der Zwischenraum zwischen dem Sensor und der Hülse ist mit einer Masse gefüllt. Ein Kontaktbereich zwischen dem Sensor und der Hülse ist frei von der Masse. Der Sensor ist vorteilhafterweise zum Erfassen von Temperaturen geeignet.

Der hier angegebene Meßfühler nutzt als allgemeinen Erfindungsgedanken die Idee, durch das Vorsehen eines Kontaktbereichs zwischen dem Sensor und der Hülse die Wärmeleitung von außen durch die Hülse auf den Sensor zu verbessern. Dadurch sinkt die thermische Ansprechzeit für den Fühler. Die Einbettung des Sensors in die Masse ist vorteilhaft zur Fixierung der einzelnen Systemelemente und um die mechanische Belastbarkeit, insbesondere gegenüber Vibrationen, zu verbessern. Jedoch ist der Sensor nicht allseitig von der Masse umgeben, sondern es gibt einen massefreien Bereich, mit dem der Sensor mit der Hülse in Kontakt steht. Dieser von der Masse freie Bereich ist insbesondere dazu geeignet, für eine gute Wärmeleitung von außen, also von der Seite der Hülse in den Sensor zu sorgen. Als Material für die Masse, in die der Sensor eingebettet ist, werden oftmals Materialien verwendet, die schlecht wärmeleitend sind und die bei allseitiger Einbettung des Sensors eine hohe thermische Ansprechzeit zur Folge hätten.

In einer bevorzugten Ausführungsform des Fühlers ist im Kontaktbereich zwischen der Hülse und dem Sensor ein elastisches Material angeordnet. Das elastische Material hat den Vorteil, daß es dem Abbau thermomechanischer Spannungen zwischen dem Sensor und der Hülse dienen kann. Thermomechanische Spannungen können beispielsweise resultieren aus einem Unterschied im thermischen Ausdehnungskoeffizienten der Hülse einerseits und des Sensors andererseits.

Das elastische Material kann in Form einer Beschichtung des Sensors vorliegen. In diesem Fall hätte der Sensor eine äußere Hülle, die aus dem elastischen Material besteht. Beispielsweise kann der Sensor allseitig von einer solchen Hülle umgeben sein. In diesem Fall könnte die Hülle beispielsweise durch Eintauchen in ein entsprechendes flüssiges Material hergestellt werden.

In einer anderen Ausführungsform des Meßfühlers kann das elastische Material auch als Beschichtung auf der Innenseite der Hülse vorgesehen sein.

Darüber hinaus ist es auch denkbar, das elastische Material als separates Element vorzusehen, das zwischen der Hülse und dem Sensor angeordnet wird.

In einer Ausführungsform des Meßfühlers kann die Masse eine Vergußmasse sein. Dabei können als Vergußmasse die üblicherweise für solche Zwecke verwendeten Materialien zum Einsatz gelangen.

Dies hat den Vorteil, daß nicht Entwicklungsaufwand für die Herstellung einer speziell für den hier beschriebenen Zweck geeignete Masse betrieben werden muß. Insbesondere schlecht wärmeleitende Vergußmassen sind hier geeignet, da die niedrige thermische Ansprechzeit durch den Kontaktbereich garantiert wird.

In einer vorteilhaften Ausführungsform weist die Hülse einen rohrförmigen Abschnitt und eine Verengung auf. Unter einen rohrförmigen Abschnitt ist ein Abschnitt der Hülse zu verstehen, der entlang einer Längsmittelachse des rohrförmigen Abschnitts eine gleichbleibende Querschnittsform und -fläche aufweist. Demgegenüber ist unter einer Verengung ein Abschnitt der Hülse zu verstehen, wo sich der die Querschnittsfläche entlang der Längsmittelachse der Hülse in eine Richtung verkleinert. Das Verkleinern des Querschnitts muß nicht notwendigerweise über die gesamten Länge der Verengung gegeben sein, vielmehr kann die Verengung auch Abschnitte aufweisen, in denen ein gegenüber dem rohrförmigen Abschnitt zwar verkleinerter Querschnitt vorliegt, dieser aber über einen bestimmten Abschnitt der Längsmittelachse gleich bleibt. Insbesondere kann die Verengung auch den Abschluß der Hülse auf einer Seite der Hülse umfassen. Dies bedeutet, daß die Hülse im Bereich der Verengung auch geschlossen ist.

Die Aufteilung der Hülse in einen relativ zur Verengung breiten rohrförmigen Abschnitt und einen Abschnitt, der die Verengung darstellt hat den Vorteil, daß der hier beschriebene Meßfühler leicht durch Einschieben eines an Elementen aufgehängten Sensors ein die Hülse hergestellt werden kann, wobei ein breiter Anfangsbereich beim Einschieben die Positionierung des Sensors erleichtert und der anschließende verjüngte beziehungsweise verengte Bereich der Hülse das Herstellen des Kontaktbereichs zwischen dem Sensor und der Hülseninnenwand erleichtert.

Dementsprechend ist bei einer vorteilhaften Ausgestaltung des Meßfühlers der Kontaktbereich im Bereich der Verengung der Hülse vorgesehen.

Die Hülse beziehungsweise die Verengung der Hülse kann mit einem schrägstehenden Hülsenabschnitt versehen sein. Das bedeutet, daß die Verengung der Hülse Seitenwände aufweist, die schräg zur Längsmittelachse der Hülse stehen. An diesen schrägstehenden Hülsenwänden kann der Sensor beim Einschieben in die Hülse leicht entlang gleiten um später auf seine endgültige Position am Kontaktbereich zu treffen.

Darüber hinaus ist es vorteilhaft, wenn der Übergang zwischen dem rohrförmigen Abschnitt und der Verengung der Hülse frei von Kanten ausgeführt ist. Diese Ausgestaltung der Hülse hat den Vorteil, daß beim Entlanggleiten des Sensors an der Hülseninnenwand ein Verhaken zwischen der Hülseninnenwand und dem Sensor verhindert werden kann.

In einer anderen Ausführungsform des Meßfühlers ist ein Stecker vorgesehen, wobei der Sensor mittels wenigstens eines Kontaktelementes mit dem Stecker verbunden ist. Die Kontaktelemente sind dabei vorteilhafterweise so ausgeführt, daß bei seitlicher Auslenkung des Sensors beziehungsweise der Kontaktelemente eine Federkraft erzeugt wird, die entgegen der Auslenkung wirkt. Die Anzahl der Kontaktelemente kann dabei zwischen 1, 2 und auch einer noch größeren Anzahl von solchen Elementen variieren. Vorzugsweise beträgt die Anzahl der Kontaktelemente zwei, nämlich je ein Element für die zwei elektrischen Pole einer Spannungsversorgung des Sensors.

Diese Ausführungsform des Meßfühlers hat den Vorteil, daß beim Zusammenschieben des Sensors und der Hülse durch Entlanggleiten des Sensors an der Hülseninnenwand eine Federkraft aufgebaut werden kann, die den Sensor gegen die Hülseninnenwand drückt und somit für eine sichere Ausgestaltung des Kontaktbereiches sorgt.

Gemäß einer anderen Ausführungsform des Meßfühlers ist eine Hülse vorgesehen, die exzentrisch zu einer Längsmittelachse der Hülse gestaltet ist.

Eine solche exzentrische Hülse kann dazu verwendet werden, ein an sich zentrisch angeordnetes beziehungsweise zentrisch gestaltetes Element enthaltend einen Stecker, elektrische Verbindungselemente beziehungsweise Kontaktelemente und den Sensor durch Aufschieben der exzentrischen Hülse so zu konfigurieren, daß der Sensor am exzentrischen Teil der Hülseninnenwand anliegt und somit den gewünschten Kontaktbereich bildet.

Es wird darüber hinaus ein Verfahren zur Herstellung des Meßfühlers angegeben, wobei das Verfahren die folgenden Schritte umfaßt:
a) In einem ersten Schritt wird ein Stecker bereitgestellt, an dem ein Sensor mittels eines oder mehrerer Kontaktelemente aufgehängt ist.
   Vorzugsweise hängt der Sensor frei an dem Stecker. Beispielsweise können die Kontaktelemente, z. B. Kontaktdrähte, mit elektrisch leitenden Elementen des Steckers, z. B. Steckerfahnen verlötet sein.
   Darüber hinaus wird eine Hülse bereitgestellt, die mit einer Masse gefüllt ist und die einen rohrförmigen Abschnitt sowie eine Verengung aufweist.
   Vorzugsweise ist die Hülse mit einer Vergußmasse gefüllt.
b) In einem darauf folgenden Schritt wird der Sensor in die Hülse eingeschoben, wobei der Sensor im Bereich der Verengung an der Innenwand der Hülse entlang gleitet.

Vorteilhafterweise kann in einem darauf folgenden Schritt noch der Stecker mit der Hülse verbunden werden, um einen mechanisch stabilen, kompakten Aufbau zu erzielen.

Das hier angegebene Verfahren macht sich den Grundgedanken zu nutze, wonach durch die letzten Endes trichterförmige Gestaltung, also die sich nach unten hin verjüngende Gestaltung der Hülse ein einfaches Einschieben des Sensors in die Hülse erzielen läßt. Der Sensor kann an der Innenwand der Hülse entlang gleiten und befindet sich nach Ende des Einschubvorgangs, insbesondere dann, wenn der Sensor während des Einschiebens federnd an der Hülseninnenwand anliegt, automatisch in einem Kontaktbereich mit der Hülse, wo ein Kontakt mit der Hülseninnenwand gewährleistet ist.

Insbesondere in Verbindung mit Kontaktelementen, die federnde Eigenschaften haben, ergibt sich der Vorteil, daß durch das Entlanggleiten des Sensors an der schrägen Hülseninnenwand ein dauernder sicherer mechanischer Kontakt zwischen dem Sensor und der Hülse gewährleistet ist, der von Anfang der ersten Berührung des Sensors mit der Hülseninnenwand bis zum Ende des Einschubvorgangs bestehen kann und somit einen sicheren Kontaktbereich fordert.

Dementsprechend ist ein Verfahren zur Herstellung des Meßfühlers besonders vorteilhaft, wobei die Kontaktelemente so gestaltet sind, daß sie während des Entlanggleitens des Sensors an der Innenwand diesen mittels einer Federkraft gegen die Innenwand drücken.

Des weiteren ist es vorteilhaft, wenn bei einem hier angegebenen Verfahren zur Herstellung Meßfühlers die Viskosität der Masse in der Hülse so gewählt wird, daß der Sensor ohne wesentliche Verbiegung der Kontaktelemente durch die Masse gleiten kann.

Durch eine solche Ausgestaltung des Verfahrens wird mittels Wahl einer relativ niedrigen Viskosität der Masse, beispielsweise der Vergußmasse, gewährleistet, daß die Vergußmasse kein wesentliches Hindernis für das Einführen des Sensors in die Hülse darstellt.

Es wird darüber hinaus ein elektrisch betriebenes Gerät angegeben, das einen hier beschriebenen Meßfühler als Temperatursensor enthält.

Durch den robusten, von einer Hülse geschützten Sensor kann gewährleistet werden, daß der hier beschriebene Fühler auch unter belastenden Außenbedingungen, beispielsweise in stark alkalischen und daher ätzenden Waschlaugen problemlos über eine lange Lebensdauer eingesetzt werden kann. Der Meßfühler kann beispielsweise dazu verwendet werden, in Waschmaschinen oder in Wäschetrocknern als Temperatursensor zu funktionieren. Mittels des Sensors wird die Temperatur gemessen und eine Temperaturregelvorrichtung innerhalb des elektrischen Geräts, vorzugsweise elektrischen Haushaltsgeräts, gesteuert.

Im folgenden wird der Meßfühler und ein elektrisches Gerät anhand von Ausführungsbeispielen näher erläutert.

Figur 1 zeigt einen Meßfühler in einer ersten Seitenansicht.

Figur 2 zeigt den Meßfühler aus Figur 1 in einer zweiten, dazu senkrechten Seitenansicht.

Die Figuren 3A, 3B, 3C zeigen verschiedene Möglichkeiten der Anordnung eines elastischen Materials zwischen dem Sensor und der Hülse.

Die Figuren 4 bis 7 zeigen verschiedene Möglichkeiten der Anordnung der elektrischen Verbindungselemente bzw. der Hülse.

Figur 8 zeigt ein elektrisches Gerät.

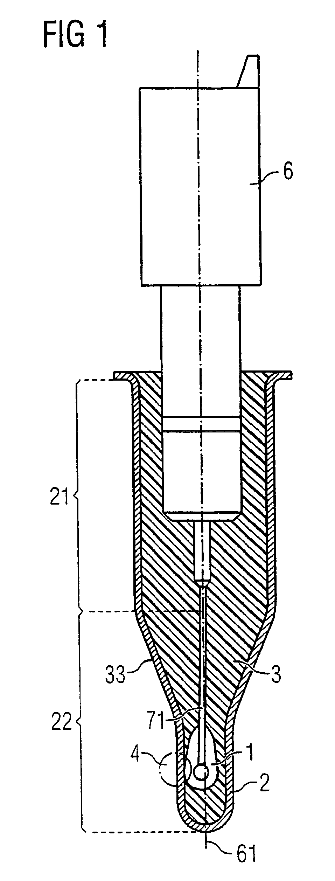

Figur 1 zeigt einen Meßfühler mit einem Stecker 6, an dessen Unterseite ein Sensor 1 aufgehängt ist. Die Aufhängung des Sensors 1 erfolgt mittels eines Kontaktelementes 71. Die Unterseite des Steckers 6 sowie das Kontaktelement 71 und der Sensor 1 sind von einer Hülse 2 bedeckt. Ein Zwischenraum zwischen dem Sensor 1 und der Hülse 2 ist gefüllt mit einer Masse 3. Die Masse 3 füllt dabei den gesamten Raum in der Hülse 2 auf, der nicht von anderen Elementen des Meßfühlers ausgefüllt ist.

Die Hülse 2 weist einen rohrförmigen Abschnitt 21 und einen verengten Abschnitt 22 auf. Der rohrförmige Abschnitt 21 befindet sich im oberen Bereich der Hülse 2. Der verengte Abschnitt 22 beziehungsweise die Verengung 22 befindet sich im unteren Teil der Hülse 2. Im unteren Teil der Hülse 2 ist auch ein Kontaktbereich 4 vorgesehen, wobei der Kontaktbereich 4 sich dadurch auszeichnet, daß er frei von Masse 3 ist. Mit anderen Worten, an dieser Stelle herrscht ein direkter Kontakt zwischen der Hülse 2 und dem Sensor 1, wobei jedoch noch eine Zwischenschicht beziehungsweise ein Material zwischen Sensor 1 und Hülse 2 vorgesehen sein kann.

Das Kontaktelement 71 verläuft im oberen Bereich parallel und zentrisch zur Längsmittelachse 61 des Steckers 6. Im unteren Bereich ist das Kontaktelement 71 leicht zur linken Seite gebogen, wodurch der Kontaktbereich 4 zwischen dem Sensor 1 und der Hülse 2 zustande kommt. Hierbei ist zu beachten, daß die Figur 1 den Meßfühler im zusammengebauten Zustand zeigt. Im nicht zusammengebauten Zustand, also in einem Zustand wo die Hülse 2 noch nicht über den Sensor 1 geschoben ist, ergibt sich ein etwas anderes Bild. Hier ist es vorgesehen, daß die Abweichung des elektrischen Kontaktelements 71 zur linken Seite noch etwas größer ist als in Figur 1 dargestellt. Dies bedeutet, daß beim Einschieben des Sensors 1 in die Hülse 2 der nach links gebogene Sensor 1 - gesehen in Einschubrichtung - etwa im mittleren Bereich der Verengung 22 an die Innenwand der Hülse 2 anstößt und an der Innenwand entlang nach unten zum Kontaktbereich 4 wandert. Während dieser Wanderung nach unten an der Innenwand der Hülse 2 entlang verengt sich die Hülse 2 zunehmend, was bedeutet, daß das Kontaktelement 71 zunehmend nach rechts gebogen wird und eine entsprechende, sich im allgemeinen verstärkende Federkraft wirkt, die den Sensor 1 gegen die Innenwand der Hülse 2 drückt.

Dieser Mechanismus setzt allerdings voraus, daß das Kontaktelement 71 federnde Eigenschaften hat, das heißt, daß es bei Ausüben einer seitlichen Auslenkung des Sensors 1 dazu geeignet ist, eine entgegen der Auslenkung wirkende Federkraft zu erzeugen. Beispielsweise kommt es in Betracht als Kontaktelement eine Kupferdraht oder ähnliches zu verwenden. Geeignet für das Kontaktelement sind auch Materialien wie Kupfer, Eisen, Nickel und deren Legierungen.

Bei dem Sensor 1 kann es sich vorteilhafterweise um einen bedrahteten NTC-Sensor aus Keramik handeln. Solche Sensoren werden vorteilhafterweise eingesetzt, um beispielsweise im Bereich der Haushaltsgeräte Temperaturen zu erfassen.

Der bedrahtete NTC-Sensor ist auf dem Stecker 6 kontaktiert.

Der Stecker 6 weist an seiner Oberseite Kontaktelemente auf, die das Einstecken des Steckers 6 in eine Vorrichtung ermöglicht, wo ein Signal des Sensors 1 weitergeleitet beziehungsweise verarbeitet wird.

Die Hülse 1 besteht vorzugsweise aus Edelstahl und weist vorzugsweise eine Wandstärke von 0,2 bis 1,0 mm auf.

Die Ausbildung der Hülse 2 aus Edelstahl hat den Vorteil, daß sie auch in chemisch aggressiver Umgebung, beispielsweise in Waschlaugen noch eine genügende chemische Stabilität aufweist. Dementsprechend ist es vorteilhaft, den hier beschriebenen Meßfühler an Stellen einzusetzen, wo er direkt in Kontakt mit ätzenden Flüssigkeiten kommt. Darüber hinaus hat Edelstahl den Vorteil, daß es gut die Wärme leitet und somit kaum begrenzend auf die thermische Ansprechzeit des Meßfühlers wirkt.

Die Masse 3 kann vorteilhaft eine Vergußmasse sein, die mit relativ einfachen Mitteln zu verarbeiten ist. Beispielsweise kommt es in Betracht ein Epoxidharz als Zwei-Komponenten-System zu verwenden, wobei vorteilhafterweise die Viskosität hinsichtlich der verwendeten Elemente, insbesondere hinsichtlich der Steifigkeit der Kontaktelemente, der Form der Hülse optimiert wird, um problemlos das Einführen des Sensors 1 beziehungsweise des Kontaktelements 71 zu ermöglichen, ohne daß es zu Widerständen oder zu Verbiegungen des Sensors beziehungsweise des Kontaktelements 71 kommt.

Figur 1 ist noch zu entnehmen, daß der Übergang vom rohrförmigen Bereich 21 in den verengten Bereich 22 ohne Ecken, sondern mit sanften Rundungen ausgeführt ist, wodurch das Einschieben des Sensors 1 in die Hülse 2 erleichtert wird, und die Gefahr vermindert wird, daß der Sensor 1 an einer Ecke hängen bleibt.

Bei dem in Figur 1 dargestellten Meßfühler wird die Wärmeeinkopplung nur noch von der Wärmeleitfähigkeit der Hülse 2 und vom Wärmeübergang von der Hülse 2 auf den Sensor 1 beeinflusst. Die Wärmeleitung über die Masse 3, die üblicherweise eine relativ schlechte Wärmeleitfähigkeit aufweist, fällt kaum noch ins Gewicht.

Insbesondere gelingt es dadurch, die thermische Ansprechzeit des Meßfühlers zu reduzieren.

Dabei wird unter der thermischen Ansprechzeit diejenige Zeitspanne verstanden, die ein auf 25 °C temperierter, und entlasteter Heißleiter benötigt, um sich - eingetaucht in ein Medium von 85 °C - auf 62,9 °C zu erwärmen. Dabei ist die thermische Ansprechzeit ebenso wie die thermische Abkühlzeitkonstante abhängig vom umgebenden Medium.

Deshalb werden möglichst standardisierte Medien verwendet für den Vergleich verschiedener Meßfühler untereinander.

Es ist noch zu beachten, daß die Masse 3 nach der Herstellung des Fühlers im allgemeinen ausgehärtet wird, was bedeutet, daß die beim Einbau des Fühlers in die Hülse 2 noch vorhandene Federkraft möglicherweise im fertigen Zustand des Meßfühlers nicht mehr festgestellt werden kann.

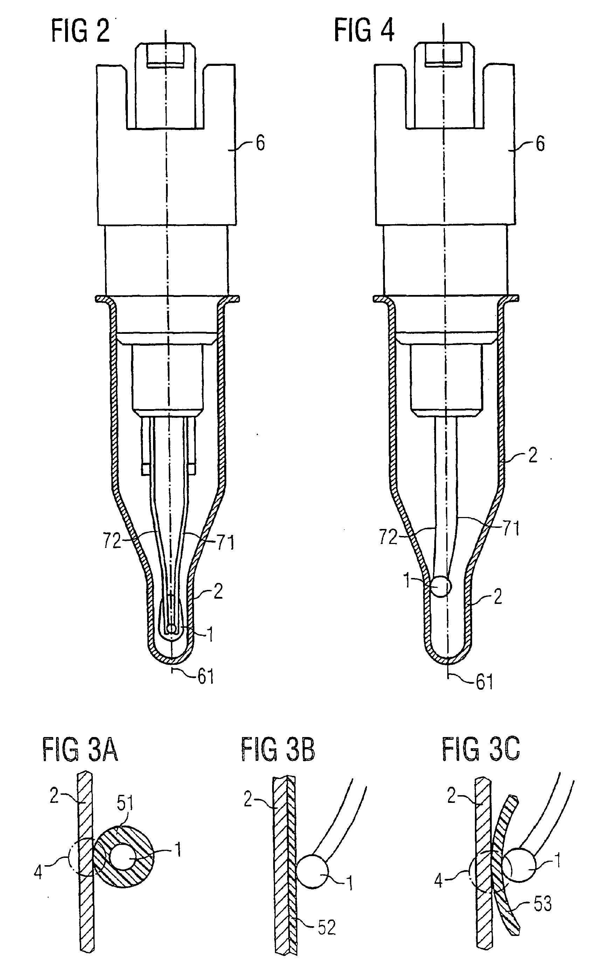

Figur 2 zeigt den Meßfühler aus Figur 1 in eine anderen Seitenansicht, nämlich um 90 ° verdreht. Es ist hier insbesondere zu erkennen, daß zur Befestigung des Sensors 1 am Stecker 6 neben dem Kontaktelement 71 noch ein weiteres Kontaktelement 72 vorgesehen ist. Um eine möglichst gute mechanische Stabilität auf dem Stecker 6 zu erzielen, sind die Kontaktelemente 71, 72 in der Nähe des Steckers 6 mit relativ großem Abstand zueinander angeordnet. In Richtung auf den Sensor 1 hin verengt sich dann der Abstand der Kontaktelemente 71, 72.

Im übrigen ist in der Zusammenschau von Figur 1 und Figur 2 zu erkennen, daß die Kontaktelemente 71, 72 nicht in einer Ebene liegen, sondern daß vielmehr das seitliche Verbiegen der Kontaktelemente 71, 72 so gestaltet ist, daß beide Kontaktelemente in gleicher Weise verbogen sind. Das heißt, daß die Richtung der Verbiegung der Kontaktelemente senkrecht steht auf der die Kontaktelemente 71, 72 im unverbogenen Zustand verbindenden Ebene.

Dadurch kann gewährleistet werden, daß beide Kontaktelemente 71, 72 in gleichem Maße verbogen werden und auch im gleichen Maße zum Aufbau der Federkraft, die für den Einbau des Sensors 1 in die Hülse 2 vorteilhaft ist, beitragen.

Figur 3A zeigt eine bevorzugte Ausführungsform des Kontaktbereichs 4 eines Meßfühlers gemäß Figur 1, wo im Kontaktbereich zwischen dem Sensor 1 und der Hülse 2 ein elastisches Material angeordnet ist. Dieses elastische Material ist in Form einer Beschichtung 51 des Sensors 1 vorgesehen. Als Material kommt beispielsweise in Betracht die Verwendung von Silikon in Verbindung mit Füllstoffen, welche beispielsweise Partikel aus Aluminiumoxid sein können. Das Material Silikon hat den Vorteil, daß es eine gute Elastizität aufweist, und daher zum Abbau von thermomechanischen Spannungen zwischen der Hülse 2 und dem Sensor 1 gut geeignet ist. Das Einbringen des Füllstoffs hat den Vorteil, daß die Wärmeleitfähigkeit des elastischen Material verbessert werden kann, was die thermische Ansprechzeit des Meßfühlers reduzieren hilft.

Die Beschichtung 51 des Sensors 1 kann beispielsweise hergestellt werden durch Eintauchen des Sensors 1 in eine entsprechendes flüssiges Material, welches anschließend die Beschichtung 51 bildet.

Figur 3B zeigt ein Ausführungsbeispiel gemäß Figur 3A, wobei jedoch das elastische Material nicht in Form einer Beschichtung des Sensors, sondern in Form einer Beschichtung 52 der Hülse 2 vorgesehen ist.

Die Beschichtung 52 der Hülse 2 kann beispielsweise hergestellt werden durch Eintauchen der Hülse 2 in ein Bad mit entsprechendem Material oder durch Aufdampfen oder ähnliche Beschichtungsmethoden.

Als Material für die Beschichtung 52 kommt das selbe Material in Betracht, wie es für die Beschichtung 51 verwendet wird.

Figur 3C zeigt noch ein weiteres Beispiel für die Ausführung des elastischen Materials zwischen dem Sensor 1 und der Hülse 2, wobei das Material in Form eines zwischen den Sensor 1 und der Hülse 2 gelegten, separaten, eigenständigen Teils realisiert wird. In diesem Fall handelt es sich um ein separates Element 53, das aus elastischem Material besteht.

Das hier beschriebene allgemeine Prinzip eines Meßfühlers kann auf verschiedenen Wegen erreicht werden. Eine Möglichkeit besteht darin unter Verwendung einer rotationssymmetrischen Hülse eine exzentrische Anordnung des Sensors zu erreichen, um sicherzustellen, daß der Sensor mit der Hülse einen Kontaktbereich bildet.

Eine andere Möglichkeit besteht darin, eine zentrische Anordnung des Sensors zu kombinieren mit einer exzentrisch geformten Hülse, was wiederum dazu führen kann, daß Hülse und Sensor einen Kontaktbereich bilden.

Ein dritte Möglichkeit besteht darin, die Hülse mit einer Verengung zu versehen, in die der Sensor gerade hineinpaßt, so daß der Sensor beim Aufschieben der Hülse in diese Verengung geschoben werden kann, und somit ein Sensor mit allseitig oder auf nur gegenüber liegenden Seiten umgebenen Kontaktbereich realisiert werden kann.

Die Figur 4 zeigt eine mögliche Ausführungsform des Meßfühlers, wobei der Sensor 1 in Bezug auf die Längsmittelachse 61, welche sowohl für den Stecker 1 als auch für die Hülse 2 gilt, exzentrisch angeordnet ist. Diese Exzentrizität wird erreicht, in dem die Kontaktelemente 71, 72 in einem Abschnitt, der in der Nähe des Steckers 6 liegt parallel zur Längsmittelachse 61 und auch zentrisch zu dieser Längsmittelachse 61 aus dem Stecker 6 herausgeführt werden. Dies gelingt beispielsweise durch Vorsehen entsprechender kleiner Steckbuchsen, falls die Kontaktelemente 71, 72 als Drähte ausgeführt sind.

Im unteren Bereich der Kontaktelemente 71, 72 sind diese gemäß Figur 4 etwas zur linken Seite gebogen, so daß eine Exzentrizität für die Lage des Sensors 1 resultiert. Es ist jedoch darauf hinzuweisen, daß Figur lediglich den zusammengebauten Zustand des Meßfühlers zeigt. Im noch nicht zusammengebauten Zustand, also ohne die darüber geschobene Hülse 2 ist die Exzentrizität des Sensors 1 größer, das heißt, der Abstand des Sensors 1 zur Längsmittelachse beziehungsweise in diesem Fall Symmetrieachse 61 ist größer als in Figur 4 dargestellt. Durch Aufschieben der Hülse 2 wird der Sensor 1 von dem verengten Abschnitt der Hülse 2 nach innen gedrückt, wo er dann schließlich unter einer Federkraft an der Hülse 2 anliegt, wobei jedoch die Exzentrizität und damit der Abstand des Sensors 1 zur Längsmittelachse 61 geringer wird.

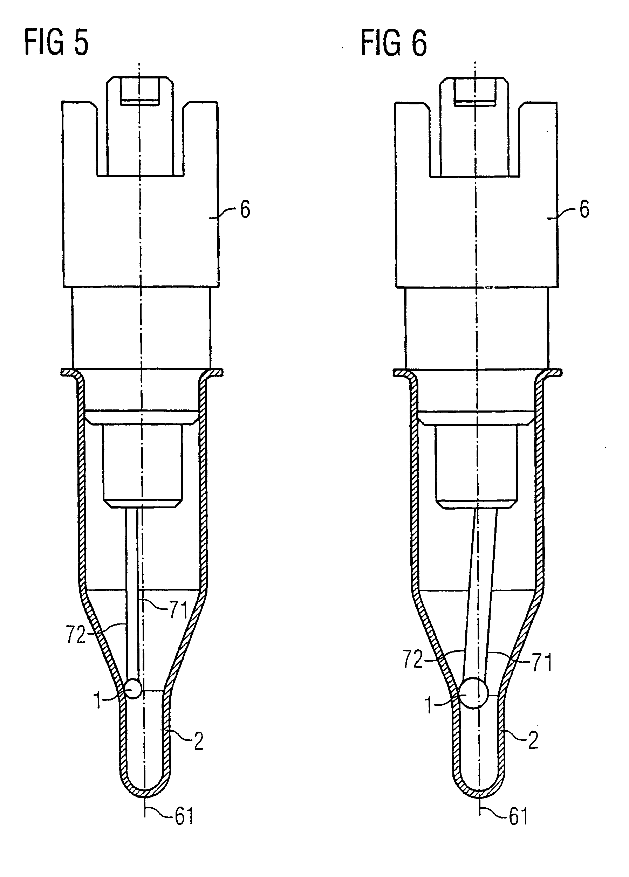

Eine weitere Möglichkeit, die Exzentrizität des Sensors 1 zu erreichen ist in Figur 5 dargestellt. Hier sind Kontaktelemente 71, 72 vorgesehen, die sowohl im oberen Bereich, also nahe am Stecker 6 als auch im unteren Bereich, also nahe am Sensor 1 parallel zueinander verlaufen. Die Kontaktelemente 71, 72 verlaufen auch parallel zur Längsmittelachse 61. Allerdings liegen sie nicht zentrisch zur Längsmittelachse 61, sondern sie liegen exzentrisch und bewirken dadurch auch die Exzentrizität des Sensors 1. Durch die Lage der Kontaktelemente 71, 72 im Stecker 6 kann so die Exzentrizität des Sensors 1 gut vorherbestimmt werden, man beachte jedoch, daß wie schon in Figur 4 ausgeführt, der Unterschied zwischen dem Zustand vor und nach dem Zusammenbau beziehungsweise nach dem Aufschieben der Hülse 2 auf den Sensor 1 besteht. Dabei wird letztlich davon auszugehen sein, daß auch in Figur 5, wo dies nicht explizit dargestellt ist, eine leichte Verbiegung der Kontaktelemente 71, 72 zur rechten Seite hin vorhanden ist, um hier den gewünschten Federdruck in Richtung auf die Innenwand der Hülse 2 aufrecht zu erhalten.

Eine weitere Möglichkeit, die Exzentrizität zu realisieren ist in Figur 6 gezeigt. Die Kontaktelemente 71, 72 verlaufen hier parallel zueinander, jedoch im Vergleich zur Längsmittelachse 61 in einem Winkel zu dieser. Ferner sind die Kontaktelemente 71, 72 am Stecker 6 nicht zentrisch, sondern exzentrisch eingesteckt, was beispielsweise durch schräg stehende Buchsen am unteren Ende des Steckers 6 erreicht werden kann. Im übrigen gilt bezüglich der Positionen des Sensors 1 im zusammengebauten und nicht zusammengebauten Zustand dasselbe wie zu Figur 4 und Figur 5 gesagte.

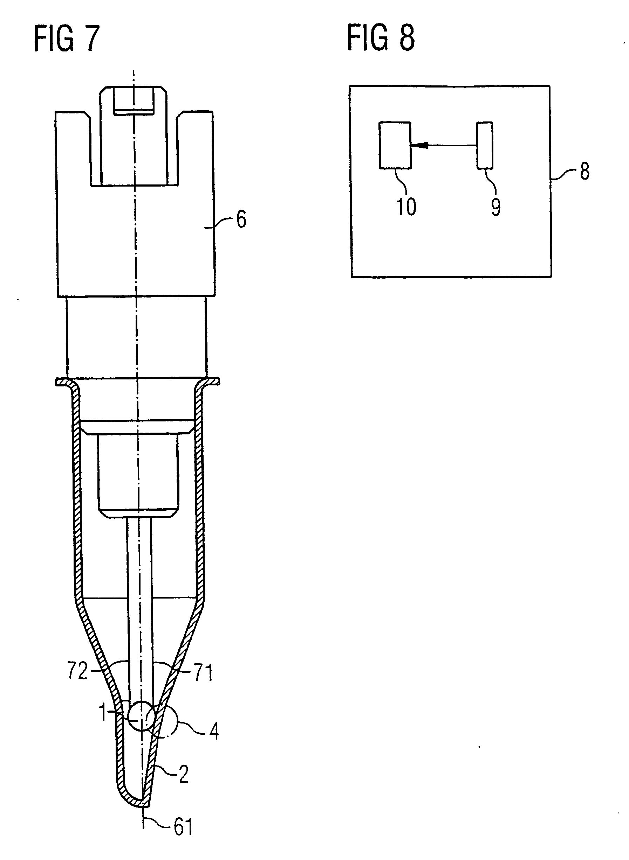

Figur 7 zeigte eine weitere Möglichkeit die Exzentrizität des Sensors 1 zu erreichen. Hier sind im nicht zusammengebauten Zustand sowohl der Sensor 1 als auch die Kontaktelemente 71, 72 zentrisch zur Längsmittelachse 61 angeordnet. Die Exzentrizität wird erreicht durch eine entsprechende Ausformung der Hülse 2, welche auf der rechten Seite eine im Vergleich zur linken Seite vergrößerte Einbuchtung erhält und wo letztlich der Kontaktbereich 4 durch diese Einbuchtung erzeugt wird. Auch hier ist wieder zu beachten, daß durch das Einschieben des Sensors 1 in die Hülse 2 eine hier nicht dargestellte Verbiegung der Kontaktelemente 71, 72 erzeugt wird, was den gewünschten Effekt des Federdrucks erzeugt, der den Sensor 1 gegen die Innenwand der Hülse 2 drückt.

Figur 8 zeigt schematisch ein elektrisches Gerät 8, das mit einem Fühler 9 der hier beschriebenen Art ausgerüstet ist. Es ist ferner noch beispielhaft eine Heizung 10 vorgesehen, die durch den Fühler 9 gesteuert wird.

Bei dem elektrischen Gerät 8 kann es sich vorzugsweise um ein Haushaltsgerät, wie zum Beispiel eine Waschmaschine oder ein Wäschetrockner handeln. Gerade in diesem Applikationsbereich werden geringe thermische Ansprechzeiten benötigt. Darüber hinaus ist auch in diesem gerade in diesem Applikationsbereich oft eine aggressive Umgebung vorhanden, so daß der Meßfühler geeignet eingekapselt werden muß, wodurch erst die konkurrierenden Forderungen nach thermischer Ansprechzeit einerseits und guter Verkapselung andererseits begründet sind.

Der hier beschriebene Meßfühler, das Verfahren zu seiner Herstellung und das elektrische Gerät sind nicht auf die hier dargestellten und beschriebenen Ausführungsbeispiele beschränkt. Sie umfassen ferner auch alle fachmännischen Abwandlungen sowie Teil- und Unterkombinationen der beschriebenen und dargestellten Merkmale und Maßnahmen. Sie umfaßt ferner auch alle Abwandlungen sowie Teil- und Unterkombinationen der in den Figuren dargestellten Merkmale und Maßnahmen.

Insbesondere ist die Erfindung nicht beschränkt auf Sensoren, die für die Erfassung einer Temperatur geeignet sind. Sie umfasst vielmehr alle Sensoren, die eine physikalische Größe erfassen und ist überall dort vorteilhaft, wo es darauf ankommt, dass der Sensor möglichst mit seiner Umgebung auf derselben Temperatur liegt.

### Bezugszeichenliste

- 1: Sensor
- 2: Hülse
- 21: Rohrförmiger Abschnitt
- 22: Verengter Abschnitt
- 3: Masse
- 4: Kontaktbereich
- 51: Beschichtung des Sensors
- 52: Beschichtung der Hülse
- 53: Separates Element
- 6: Stecker
- 61: Mittellängsachse
- 71, 72: Kontaktelement
- 8: Elektrisches Gerät
- 9: Fühler
- 10: Heizung

## Patentansprüche

1. Meßfühler enthaltend
- einen Sensor (1), der in einer Hülse (2) angeordnet ist,
- wobei der Raum zwischen dem Sensor (1) und der Hülse (2) mit einer Masse (3) gefüllt ist,
- wobei ein Kontaktbereich (4) zwischen dem Sensor (1) und der Hülse (2) frei von der Masse (3) ist, und
- bei dem im Kontaktbereich (4) zwischen der Hülse (2) und dem Sensor (1) ein elastisches Material angeordnet ist.

2. Meßfühler nach Anspruch 1,
bei dem das elastische Material in einer Beschichtung (51) des Sensors (1) enthalten ist.

3. Meßfühler nach Anspruch 1,
bei dem das elastische Material in einer Beschichtung (52) der Hülse (2) enthalten ist.

4. Meßfühler nach Anspruch 1,
bei dem das elastische Material in einem separaten Element (53) enthalten ist.

5. Meßfühler nach einem der Ansprüche 1 bis 4,
bei dem die Masse (3) eine Vergußmasse ist.

6. Meßfühler nach einem der Ansprüche 1 bis 5,
bei dem die Hülse (2) einen rohrförmigen Abschnitt (21) und eine Verengung (22) aufweist.

7. Meßfühler nach Anspruch 6,
bei dem sich der Kontaktbereich (4) im Bereich der Verengung (22) befindet.

8. Meßfühler nach einem der Ansprüche 6 oder 7,
bei dem die Verengung (22) mit einem schrägstehenden Abschnitt versehen ist.

9. Meßfühler nach einem der Ansprüche 6 bis 8,
bei dem der Übergang zwischen dem rohrförmigen Abschnitt (21) und der Verengung (22) frei von Kanten ausgeführt ist.

10. Meßfühler nach einem der Ansprüche 1 bis 9,
bei dem die Hülse (2) exzentrisch geformt ist.

11. Meßfühler nach einem der Ansprüche 1 bis 10,
bei dem ein Stecker (6) vorgesehen ist, wobei der Sensor (1) wenigstens mittels eines Kontaktelementes (71, 72) mit dem Stecker verbunden ist, wobei die Kontaktelemente (71, 72) bei seitlicher Auslenkung eine Federkraft entgegen der Auslenkung ausüben können.

12. Verfahren zur Herstellung eines Meßfühlers mit folgenden Schritten:
a) Bereitstellen eines Steckers (6) mit einem Sensor (1), wobei der Sensor (1) mittels wenigstens eines Kontaktelements (71, 72) am Stecker (6) aufgehängt ist sowie
Bereitstellen einer Hülse (2), die mit einer Masse (3) gefüllt ist, wobei die Hülse (2) einen rohrförmigen Abschnitt (21) und eine Verengung (22) aufweist sowie
Bereitstellen eines elastischen Materials zwischen Sensor (1) und Hülse (2).
b) Einschieben des Sensors (1) in die Hülse (2), wobei der Sensor (1) im Bereich der Verengung (22) an der Innenwand der Hülse (2) entlang gleitet.

13. Verfahren nach Anspruch 12,
wobei die Kontaktelemente (71; 72) so gestaltet sind, daß sie während des Entlanggleitens des Sensors (1) an der Innenwand der Hülse (2) diesen mittels einer Federkraft gegen die Innenwand der Hülse (2) drücken.

14. Verfahren nach einem der Ansprüche 12 oder 13,
wobei die Viskosität der Masse (3) so gewählt ist, daß der Sensor (1) ohne wesentliche Verbiegung der Kontaktelemente (71, 72) durch die Masse (3) gleiten kann.

15. Elektrisches Gerät, enthaltend einen Meßfühler (9) nach einem der Ansprüche 1 bis 13, wobei der Meßfühler (9) zur Temperaturmessung vorgesehen ist.

## Claims

1. Measurement sensor containing
- a sensor (1) which is arranged in a sleeve (2),
- the space between the sensor (1) and the sleeve (2) being filled with a compound (3),
- a contact region (4) between the sensor (1) and the sleeve (2) being free of the compound (3), and
- in which an elastic material is arranged in the contact region (4) between the sleeve (2) and the sensor (1).

2. Measurement sensor according to Claim 1,
in which the elastic material is contained in a coating (51) of the sensor (1).

3. Measurement sensor according to Claim 1,
in which the elastic material is contained in a coating (52) of the sleeve (2).

4. Measurement sensor according to Claim 1,
in which the elastic material is contained in a separate element (53).

5. Measurement sensor according to one of Claims 1 to 4,
in which the compound (3) is a potting compound.

6. Measurement sensor according to one of Claims 1 to 5,
in which the sleeve (2) has a tubular section (21) and a constriction (22).

7. Measurement sensor according to Claim 6,
in which the contact region (4) is situated in the region of the constriction (22).

8. Measurement sensor according to either of Claims 6 and 7,
in which the constriction (22) is provided with an oblique section.

9. Measurement sensor according to one of Claims 6 to 8,
in which the junction between the tubular section (21) and the constriction (22) is free of edges.

10. Measurement sensor according to one of Claims 1 to 9,
in which the sleeve (2) is formed eccentrically.

11. Measurement sensor according to one of Claims 1 to 10,
in which a connector (6) is provided, the sensor (1) being connected to the connector at least by means of a contact element (71, 72), the contact elements (71, 72) being able to exert a spring force counter to the lateral deflection in the case of such deflection.

12. Method for manufacturing a measurement sensor, having the following steps of:
a) providing a connector (6) having a sensor (1), the sensor (1) being suspended from the connector (6) by means of at least one contact element (71, 72), and
providing a sleeve (2) which is filled with a compound (3), the sleeve (2) having a tubular section (21) and a constriction (22), and
providing an elastic material between the sensor (1) and the sleeve (2),
b) inserting the sensor (1) into the sleeve (2), the sensor (1) sliding along the inner wall of the sleeve (2) in the region of the constriction (22).

13. Method according to Claim 12,
the contact elements (71, 72) being configured in such a manner that they press the sensor against the inner wall of the sleeve (2) by means of a spring force while the sensor (1) is sliding along the inner wall of the sleeve (2).

14. Method according to either of Claims 12 and 13,
the viscosity of the compound (3) being selected in such a manner that the sensor (1) can slide through the compound (3) without bending the contact elements (71, 72) to a significant extent.

15. Electrical apparatus containing a measurement sensor (9) according to one of Claims 1 to 13, the measurement sensor (9) being intended to measure temperature.

## Revendications

1. Sonde de mesure comportant
- un capteur (1) qui est disposé dans un manchon (2),
- dans lequel l'espace compris entre le capteur (1) et le manchon (2) est empli d'une composition (3),
- dans lequel une zone (4) de contact entre le capteur (1) et le manchon (2) est exempte de la composition (3), et
- dans lequel une matière élastique est disposée dans la zone (4) de contact entre le manchon (2) et le capteur (1).

2. Sonde de mesure suivant la revendication 1, dans lequel la matière élastique est contenue dans un revêtement (51) du capteur (1).

3. Sonde de mesure suivant la revendication 1, dans lequel la matière élastique est contenue dans un revêtement (52) du manchon (2).

4. Sonde de mesure suivant la revendication 1, dans lequel la matière élastique est contenue dans un revêtement (53) distinct.

5. Sonde de mesure suivant l'une des revendications 1 à 4, dans lequel la composition (3) est une composition de scellement.

6. Sonde de mesure suivant l'une des revendications 1 à 5, dans lequel le manchon (2) a un tronçon (21) tubulaire et un rétrécissement (22).

7. Sonde de mensure suivant la revendication 6, dans lequel la zone (4) de contact se trouve dans la zone du rétrécissement (22).

8. Sonde de mesure suivant l'une des revendications 6 ou 7, dans lequel le rétrécissement (22) est pourvu d'une partie inclinée.

9. Sonde de mesure suivant l'une des revendications 6 à 8, dans lequel la transition entre la partie (21) tubulaire et le rétrécissement (22) est réalisée sans arrête.

10. Sonde de mesure suivant l'une des revendications 1 à 9, dans lequel le manchon (2) est conformé de manière excentré.

11. Sonde de mesure suivant l'une des revendications 1 à 10, dans lequel il est prévu un connecteur (6), le capteur (1) étant relié au connecteur au moyen d'au moins un élément (71, 72) de contact, les éléments (71, 72) de contact pouvant appliquer en cas de déviation latérale une force élastique à l'encontre de cette déviation.

12. Procédé de fabrication d'une sonde de mesure ayant les stades suivantes :
a) On se procure un connecteur (6) ayant un capteur (1), le capteur (1) étant suspendu au connecteur (6) au moyen d'au moins un élément (71, 72) de contact, ainsi que
on se procure un manchon (2) qui est garni d'une composition (3), le manchon (2) ayant un tronçon (21) et un rétrécissement (22), ainsi que
on se procure une matière élastique entre le capteur (1) et le manchon (2).
b) On introduit le capteur (1) dans le manchon (2), le capteur (1) glissant dans la zone de rétrécissement (22) sur la paroi intérieure du manchon (2).

13. Procédé suivant la revendication 12,
dans lequel les éléments (71, 72) de contact sont tels qu'ils repoussent, pendant le glissement du capteur sur la paroi intérieure du manchon (2), le capteur au moyen d'une force élastique sur la paroi intérieure du manchon (2).

14. Procédé suivant l'une des revendications 12 ou 13,
dans lequel on choisit la viscosité de la composition (3) de façon à ce que le capteur (1) puisse glisser dans la composition (3) sans flexion sensible des éléments (71, 72) de contact.

15. Appareil électrique comportant une sonde (9) de mesure suivant l'une des revendications 1 à 13, la sonde (9) de mesure étant prévue pour la mesure de la température.
